# EUROPÄISCHE PATENTSCHRIFT

(11) **EP 0 735 757 B1**
(45) Veröffentlichungstag und Bekanntmachung des Hinweises auf die Patenterteilung: **26.05.1999**
(21) Anmeldenummer: 96104200.9
(22) Anmeldetag: 16.03.1996
(51) Int. Cl.: H04N 7/14, H04N 7/18

(54) **Verfahren und Vorrichtung zur automatischen Bildaufnahme des Gesichtes einer Person**
Method and apparatus for automatically taking pictures of a person's face
Procédé et appareil pour prendre des vues automatiques du visage d'une personne

(30) Priorität: 30.03.1995 DE 19511713
(43) Veröffentlichungstag der Anmeldung: 02.10.1996
(73) Patentinhaber: C-Vis Computer Vision und Automation GmbH, 44799 Bochum (DE)
(72) Erfinder: Giefing, Gerd-Jürgen, Dr. Ing., 44789 Bochum (DE); Vetter, Volker, 44866 Bochum (DE); Zielke, Thomas, Dr. Ing., 44789 Bochum (DE)
(74) Vertreter: Harwardt, Günther, Dipl.-Ing.

(56) Entgegenhaltungen:
- EP-A- 0 514 933
- EP-A- 0 578 508
- WO-A-94/17636
- DE-A- 4 238 743
- US-A- 5 206 721

## Beschreibung

Die Erfindung betrifft ein Verfahren und eine Vorrichtung zur automatischen Bildaufnahme des Gesichtes einer Person.
Aus der DE 42 38 743 A1 ist eine Kamerasteuereinrichtung für ein Bildfernsprech-Teilnehmergerät bekannt, bei dem zwei Porträtkameras verwendet werden. Voraussetzung für die Funktion ist, daß das Gesicht nahe zur Kamera plaziert ist, so daß es von vornherein einen großen Bereich des Kamerabildes ausfüllt. Dabei muß zunächst von der Bedienungsperson eine frontale Positionierung des Gesichtes gegenüber einer der Kameras vorgenommen werden, wobei ein Videobild erzeugt wird, das in einem Bildspeicher gespeichert wird. Das anschließend aktuell aufgenommene Bild wird mit dem im Bildspeicher abgespeicherten Bild nun als Referenzbild verglichen. Ändert sich die Lage des Bildes, so wird ein Korrektursignal entsprechend erzeugt und die Kamera nachgeführt. So wird jeweils die Lage des letzten Bildes mit der des neuen Bildes verglichen und die Kamera entsprechend gesteuert. Die zweite Porträtkamera wird erst dann aktiviert, wenn der von der ersten Kamara erfaßte Bereich nur einen ungünstigen Blickwinkel für eine Wiedergabe liefert. Zur Umschaltung wird der Auslenkwinkel der jeweils aktiven Kamera genutzt. Die Umschaltung erfolgt, wenn der Auslenkwinkel einen bestimmten Wert überschreitet. Hierbei ist es erforderlich, daß zur einer einwandfreien Funktion zunächst von Hand eine Voreinstellung vorgenommen wird. Die anschließende Steuerung erfolgt ausschließlich dergestalt, daß die Kamera dem Objekt nach seiner Verlagerung folgt. Dies kann jedoch nur in einem engen Bereich geschehen. Verläßt das Objekt bzw. das Gesicht den wirksamen Bereich, so ist eine neue Positionierung vor einer der beiden Kameras und eine Voreinstellung von Hand erforderlich, da kein Referenzbild vorhanden ist, das zur Nachsteuerung zu nutzen ist.

Die DE 31 46 552 C2 beschreibt eine Einrichtung mit zwei Kameras unterschiedlich großen Bildwinkels. Die Kamera mit dem kleineren Bildwinkel dient als Suchkamera, mit der ein Beobachter ein Beobachtungsfeld durchforstet. Eine solche Einrichtung wird im militärischen Bereich eingesetzt und dient dazu, unter Umständen getarnte Objekte in weiter Entfernung mit der Teleoptik der Kamera mit dem kleinen Bildwinkel zu entdecken. Zu dem Bild der Kamera mit dem kleinen Bildwinkel und entsprechend kleinem Abbildungsbereich, wird gleichzeitig ein Übersichtsbild erzeugt, das die Umgebung zu dem Detailbild zeigt. Wird der Blickbereich der Kamera mit dem kleinen Bildwinkel verändert, verändert sich gleichzeitig die Lage einer Markierung, die dem Bediener die Ausrichtung der Suchkamera (Kamera mit kleinem Bildwinkel) im Übersichtsbild anzeigt. Entsprechend werden die beiden Kameras grundsätzlich gemeinsam bewegt. Diese sind dazu in einer gemeinsamen Justiervorrichtung angeordnet, die nach Höhe und Seite drehbar ist.

Die EP 05 78 508 A2 beschreibt ein Gerät mit einer eingebauten Videokamera, die mit Hilfe von Stellmotoren geschwenkt und geneigt werden kann. Für den Benutzer stellt dieses Gerät praktisch eine normale Videokamera mit der Besonderheit dar, daß Gesichter, die sich in der Nähe vor der Aufnahmeoptik befinden, automatisch von der Kamera angeschaut werden. In der Kamera ist eine Bildverarbeitungseinrichtung vorgesehen, in der ein einfaches abstraktes Gesichtsmodell gespeichert ist. Das Modell besteht im wesentlichen aus der Annahme einer Bildregion, die sich durch einen bestimmten Farbton auszeichnet und die nach oben durch eine zweite Bildregion mit dunklem Grauwert (Haar-Region) begreuzt ist. Diese Einrichtung ist jedoch nur dann wirksam, wenn das Gesicht nahezu vollständig im Blickbereich der Kamera ist. Dadurch entsteht der Zielkonflikt, einerseits ein hochaufgelöstes Gesichtsbild zu erhalten und andererseits den Abbildungsmaßstab so klein zu halten, daß der Nachführmechanismus nicht zusammenbricht. Daher kann das dort beschriebene Gerät nur dann zufriedenstellend funktionieren, wenn sich das Gesicht dicht vor der Kamera in einem eng begrenztem Bereich befindet, wie dies bei Video - Telefonen oder Videokonferenz - Arbeitsstationen der Fall ist.

Der Erfindung liegt daher die Aufgabe zugrunde, ein Verfahren und eine Vorrichtung zu schaffen, die automatisch innerhalb eines vorgegebenen Blick- bzw. Raumbereiches eine Entdeckung und eine vollständige, hochauflösende Bilderfassung eines Gesichtes ermöglichen.

Diese Aufgabe wird erfindungsgemäß durch ein Verfahren zur automatischen Bildaufnahme des Gesichtes einer Person unter Verwendung einer Suchkamera gelöst, bei der die Suchkamera mit einem großen Bildwinkel einen bestimmten Blickbereich erfaßt, und eine Porträtkamera vorgesehen ist, die einen kleinen Bildwinkel aufweist sowie einen kleinen Blickbereich innerhalb des Blickbereiches der Suchkamera erfaßt, wobei die Porträtkamera mit ihrem Blickbereich auf einen Abschnitt des Blickbereiches der Suchkamera geführt wird, welcher abhängig von dem Vorhandensein von Merkmalen bestimmt wird, welche zumindest in einem bestimmten Grad in Übereinstimmung zu in Form von Referenzdaten vorgegebenen Merkmalen sind, die für ein Gesicht typisch sind.

Diese Aufgabe wird erfindungsgemäß ferner durch eine Vorrichtung zur automatischen Bildaufnahme des Gesichtes einer Person gelöst, bei der Mittel zur Hinterlegung der für ein Gesicht typischen Merkmale in Form von Referendaten, mindestens eine Suchkamera, die mit einem großen Bildwinkel einen bestimmten Blickbereich erfaßt, Bilddatenerfassungsmittel, die zur Erfassung des von der Suchkamera aufgenommenen Bildes in Form von Bilddaten dienen, Mittel zum Vergleich der vorgenannten Bilddaten auf das Vorhandensein und die Positionierung mindestens eines den Referenzdaten entsprechenden Merkmales im Blickbereich der Suchkamera, mindestens eine Porträtkamera, die einen kleinen Bildwinkel aufweist und einen kleinen Blickbereich innerhalb des Blickbereiches der Suchkamera erfaßt und eine Steuereinrichtung zur Ausrichtung der Blickrichtung der Porträtkamera auf den Abschnitt des Blickbereiches der Suchkamera, welcher das / die den Referenzdaten entsprechende-n Merkmal-e aufweist, vorgesehen sind.

Es werden also ein Verfahren und eine Vorrichtung durch die Erfindung bereitgestellt, durch welche ein größerer Blickbereich, der von der Suchkamera aufgenommen wird, auf das Vorhandensein von Merkmalen untersucht wird, die typisch für ein Gesicht sind, um die Porträtkamera abhängig von der Lage und Bewegung dieser Merkmale auszurichten und das Gesicht in einem Abbildungsmaßstab eines Teleobjektives näher zu erfassen. Darüberhinaus ist noch eine weitere Detailbetrachtung des Gesichtes möglich.

Dabei wird auch berücksichtigt, ob die für ein Gesicht typischen Merkmale mit einer bestimmten Qualität in dem Blickbereich der Suchkamera auftreten. Dabei kann die Suchkamera selbst unbeweglich montiert sein und sich in Ruhe befinden.

In Ausgestaltung der Erfindung ist vorgesehen, daß die Bilddatenerfassungsmittel wahlweise und/oder zeitweise zur Erfassung des von der Portraitkamera aufgenommenen Bildes dienen und die daraus sich ergebenden Bilddaten nach Vergleich mit den Referenzdaten zur weiteren Ausrichtung, Schärfeneinstellung, der Einstellung der optischen Abbildungsgröße und/oder der Einstellung der Porträtkamera auf ein Detail des Gesichtes dienen. Hierdurch ist es möglich, eine klarere Abbildung zu schaffen oder ein Detail des Gesichtes deutlicher zu erfassen.

In Konkretisierung der Erfindung ist ferner vorgesehen, daß die Suchkamera und/oder die Porträtkamera mindestens einen opto-elektronischen Flächensensor aufweist, der insbesondere als CCD-Kamera oder CMOS-Kamera gestaltet ist. Dabei wird der Flächensensor genutzt, um ein elektronisches Bildsignal zu erzeugen. Schließlich ist nach einer weiteren Ausgestaltung der Erfindung vorgesehen, das von der Porträtkamera erzeugte elektronische Bildsignal zur automatischen Identifizierung eines Gesichtes, zur automatischen Speicherung oder Fernübertragung zu nutzen. Eine solche Nutzung kommt beispielsweise für eine automatisierte Zutrittskontrolle in Frage.

Schließlich ist in weiterer Ausgestaltung vorgesehen, daß das Bildsignal aufgrund eines Auslösesignals von einer Gesichtsbildverarbeitungseinrichtung weiterverarbeitet wird, und daß das Auslösesignal abhängig von der Erreichung des Grades der Übereinstimmung mit in der Speichereinheit hinterlegten Referenzdaten erzeugt wird. Dies bedeutet, daß erst dann eine Weiterverarbeitung des Gesichtsbildes erfolgt, wenn eine bestimmte Qualität der Abbildung erzielt worden ist.

Ein bevorzugtes Ausführungsbeispiel und die erfindungsgemäße Verfahrensweise sind anhand der einzigen Zeichnungsfigur in Form eines Blockschaltbildes näher erläutert.

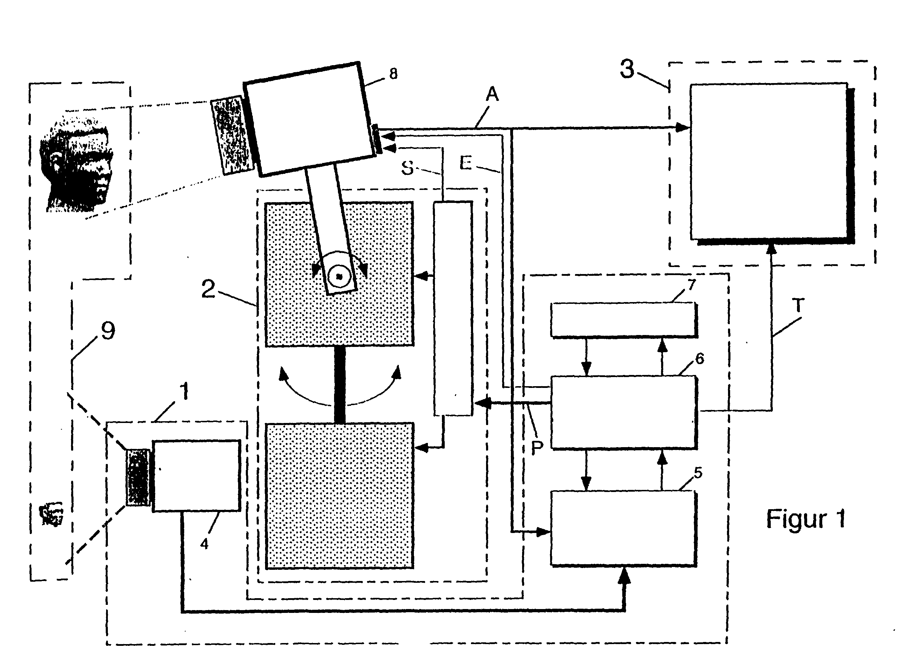

Die in der Figur 1 gezeigte Bildverarbeitungseinrichtung 1 weist eine Suchkamera 4 zur Aufnahme spezieller Merkmale 9 eines Gesichts einer Person auf. Die Suchkamera 4 weist mindestens einen opto-elektronischen Flächensensor mit zugehöriger Abbildungsoptik auf. In einem konkreten Ausführungsbeispiel handelt es sich bei der Suchkamera 4 um eine CCD- oder CMOS-Kamera mit einem Objektiv kleiner Brennweite (großer Bildwinkel). Nach einer vorteilhaften Ausgestaltung umfaßt der Blickbereich der Suchkamera 4 mindestens den gesamten Blickbereich, den die Porträtkamera 8 durch Änderung ihrer Ausrichtung überstreichen kann.

Während die Porträtkamera 8 typischerweise einen kleinen Bildwinkel (teleoptische Abbildung) aufweist und durch die Ausrichtungsvorrichtung 2 in ihrer Blickrichtung einstellbar ist, weist die Suchkamera 4 einen dazu relativ großen Bildwinkel (weitwinklige Abbildung) auf, wobei die Blickrichtung fix ist oder nur durch ein Schwenken der gesamten Anordnung 2, 4, 8 veränderbar ist.

Die Datenverarbeitungs- und Vergleichseinrichtung 6 vergleicht die aufgenommenen Merkmale 9 mit in der Speichereinheit hinterlegten Referenzmerkmalen, beispielsweise in Form der Farbgebung bestimmter Flächenelemente von Bildpunkten auf der Sensorfläche. In Abhängigkeit der X-Y-Position der gefundenen Merkmale auf der Sensorfläche der Suchkamera 4 wird die Ausrichtungsvorrichtung 2 gesteuert, die mit der Porträtkamera 8 verbunden ist. In einem konkreten Ausführungsbeispiel ist die Ausrichtungsvorrichtung 2 ein motorisch in zwei Freiheitsgraden bewegbarer Kamera-Schwenk-/Neigkopf, auf dem die Porträtkamera 8 montiert ist.

Eine Integration von Porträtkamera 8 und Ausrichtungsvorrichtung 2 in eine Vorrichtung zur steuerbaren Bildaufnahme ist auch möglich. Weiterhin kann die Ausrichtungsvorrichtung 2 auch ohne mechanisch bewegliche Teile realisiert werden, wenn beispielsweise ein Teilbereich eines extrem großflächigen Sensors selektiv ausgelesen wird. Eine Integration der gesamten Bildverarbeitungseinrichtung 1 in eine "intelligente Kamera" ist auch möglich.

Ferner kann die Suchkamera 4 aus einer Anordnung von zwei oder mehreren CCD-Kameras bestehen, die den gesamten Blickbereich abdecken, den die Porträtkamera 8 durch Änderung ihrer Blickrichtung mit Hilfe der Ausrichtungsvorrichtung 2 überstreichen kann. Die Art der Anordnung kann beispielsweise fächerförmig und blickbereichsüberlappend sein. Die Bilddatenerfassungseinheit 5 ist entsprechend mehrkanalig auszulegen.

In Abhängigkeit des Positioniersignals P stellt die Ausrichtungsvorrichtung 2 die Blickrichtung der Porträtkamera 8 so ein, daß diejenigen Merkmale 9, die auf das Gesicht einer Person hinweisen, möglichst zentral im Blickbereich der Porträtkamera 8 abgebildet werden. Zweckmäßigerweise wird in Abhängigkeit der X-Y-Position der relevanten Merkmale 9 auf der Sensorfläche bzw. den Sensorflächen der Suchkamera 4 und zusätzlich in Abhängigkeit der Intensität der zugehörigen Bildpunkte von der Datenverarbeitungs- und Vergleichseinrichtung 6 ein Einstellsignal E für die Porträtkamera 8 erzeugt, derart, daß die Fokussierung, die Belichtungssteuerung und/oder der Abbildungsmaßstab (Brennweite) der Porträtkamera 8 bezüglich eines fixierten Gesichts vorteilhaft ein- bzw. nachgestellt werden kann. Insbesondere kann vorgesehen sein, die Suchkamera 4 als Stereo-Kamera, beispielsweise durch zwei nebeneinander anbrachte CCD-Kameras, auszuführen. In diesem Falle kann durch eine Stereovergleichsmesssung aus der X-Y-Position der Merkmale 9 auf mindestens zwei Sensorflächen der Suchkamera 4 der Abstand zu der betrachteten Person bestimmt werden. Dadurch wird eine Verbesserung der Genauigkeit der Ausrichtung der Porträtkamera 8 durch die Ausrichtungsvorrichtung 2 möglich. Die Einstellung der Fokussierung und des Abbildungsmaßstabes (Brennweite) der Porträtkamera 8 über das Einstellsignal E kann damit ebenfalls verbessert werden.

Wenn die Porträtkamera 8 ein elektronisches Bildsignal A liefert, besteht ferner die Möglichkeit, das elektronische Bildsignal A der Porträtkamera 8 zusätzlich der Bilddatenerfassungseinheit 5 zuzuführen. In diesem Falle kann in Abhängigkeit von Detailmerkmalen des Gesichts, wie zum Beispiel Augen, Nase oder Mund, eine Feinausrichtung der Porträtkamera 8 durch die Datenverarbeitungs- und Vergleichseinrichtung 6 veranlaßt werden. Die Erkennung solcher Detailmerkmale erfolgt durch Vergleich mit Referenzmerkmalen, die in der Speichereinheit 7 hinterlegt sind.

Die Porträtkamera 8 kann weiterhin aus einer Anordnung von zwei oder mehreren CCD-Kameras, beziehungsweise zwei oder mehreren andersartigen opto-elektronischen Flächensensoren mit zugehöriger Abbildungsoptik aufgebaut sein. In diesem Falle besteht grundsätzlich die Möglichkeit, die Blickrichtung der Porträtkamera 8 durch elektronische Umschaltung zwischen den einzelnen Bildsensoren in diskreter Form zu verändern. Die Ausrichtungsvorrichtung 2 kann diese Möglichkeit zur Ausführung einer bestimmten Blickrichtungsvorgabe einsetzen, indem über das Umschaltesignal S ein Teilschritt der gesamten, durch das Positioniersignal P vorgegebenen Blickrichtungsänderung ausgeführt wird.

Wenn ferner eine Einrichtung zur Gesichtsbildverarbeitung 3 eingesetzt werden soll, wird für diese ein Auslösesignal T erzeugt, das in Abhängigkeit des Ähnlichkeitsgrades (Vergleichsgüte) der detektierten Gesichtsmerkmale 9 mit den in der Speichereinheit 7 hinterlegten Referenzmerkmalen die Zeitpunkte für eine Bildaufnahme anzeigt und mit einem Gütemaß bewertet. Das Auslösesignal T kann von der Datenverarbeitungs- und Vergleichseinrichtung 6 aufgrund der Gesichtsmerkmale 9 von der Suchkamera 4 und/oder der Porträtkamera 8 erzeugt werden.

Mit Hilfe des erfindungsgemäßen Verfahrens bzw. der erfindungsgemäßen Vorrichtung können detailreiche bzw. formatfüllende Bilder des Gesichts einer Person mit einer Kamera aus einem Abstand von mehreren Metern automatisch aufgenommen werden. Damit werden zum Beispiel qualitativ hochwertige Gesichtsbildaufnahmen durch Überwachungskameras von typischen Anbringungsorten aus, an Eingängen oder in Schalterräumen, ermöglicht. Gegenwärtig sind solche automatischen Gesichtsbildaufnahmen nur bei sehr nahem Herantreten der Person an eine weitwinklige Kamera oder bei einer genauen Positions- und Haltungsanweisung an die betreffende Person möglich.

Ein konkretes Anwendungsbeispiel ist die klinische Langzeitbeobachtung von Epilepsie-Patienten. In diesem Falle ist die Ausführung der Gesichtsbildverarbeitungseinrichtung 3 beispielsweise ein Aufzeichnungsgerät, das automatisch eine synchrone Speicherung von Gesichtsbildern und gleichzeitig gemessenen neurologischen Signalen des unter Beobachtung stehenden Patienten vornimmt.

Ein weiteres konkretes Anwendungsbeispiel der Gesichtsbildverarbeitungseinrichtung 3 ist ein System zur automatischen Gesichtserkennung und Personenidentifizierung aus einem Videobild. Mit Hilfe des erfindungsgemäßen Verfahrens bzw. der erfindungsgemäßen Vorrichtung kann mit der Einrichtung zur Gesichtserkennung und Personenidentifizierung beispielsweise ein Zutritts- bzw. Zugangskontrollsystem realisiert werden, das die Identität von Personen praktisch beim Vorbeigehen an der Kontrollstelle prüft.

Ein weiteres konkretes Ausführungsbeispiel der Gesichtsbildverarbeitungseinrichtung 3 ist eine Einrichtung zur Erkennung einer Benutzungsberechtigung für ein Fahrzeug, wie sie in der deutschen Patentanmeldung DE-A-44 16 507 beschrieben ist.

### Bezugszeichenliste

- 1: Bildverarbeitungseinrichtung
- 2: Sensor-Ausrichtungsvorrichtung
- 3: Gesichtsbildverarbeitungseinrichtung
- 4: Suchkamera
- 5: Bilddatenerfassungseinheit
- 6: Datenverarbeitungs- und Vergleichseinrichtung
- 7: Speichereinheit
- 8: Porträtkamera
- 9: Visuelle Merkmale
- A: Elektronisches Bildsignal
- E: Einstellsignal
- P: Positioniersignal
- S: Umschaltsignal
- T: Auslösesignal

## Patentansprüche

1. Verfahren zur automatischen Bildaufnahme des Gesichtes einer Person, gekennzeichnet durch die Verwendung einer Suchkamera, die mit einem großen Bildwinkel einen bestimmten Blickbereich erfaßt, und einer Porträtkamera, die einen kleinen Bildwinkel aufweist sowie einen kleinen Blickbereich innerhalb des Blickbereiches der Suchkamera erfaßt, wobei die Porträtkamera mit ihrem Blickbereich auf einen Abschnitt des Blickbereiches der Suchkamera geführt wird, welcher abhängig von dem Vorhandensein von Merkmalen bestimmt wird, welche zumindest mit einem bestimmten Grad in Übereinstimmung zu in Form von Referenzdaten vorgegebenen Merkmalen sind, die für ein Gesicht typisch sind.

2. Vorrichtung zur automatischen Bildaufnahme des Gesichtes einer Person, dadurch gekennzeichnet, daß Mittel zur Hinterlegung von für ein Gesicht typischen Merkmalen in Form von Referenzdaten, mindestens eine Suchkamera (4), die mit einem großen Bildwinkel einen bestimmten Blickbereich erfaßt, Bilddatenerfassungsmittel (5), die zur Erfassung des von der Suchkamera (4) aufgenommenen Bildes in Form von Bilddaten dienen, Mittel (6) zum Vergleich der vorgenannten Bilddaten auf das Vorhandensein und die Positionierung mindestens eines den Referenzdaten entsprechenden Merkmales im Blickbereich der Suchkamera (4), mindestens eine Porträtkamera (8), die einen kleinen Bildwinkel aufweist und einen kleinen Blickbereich innerhalb des Blickbereiches der Suchkamera (4) erfaßt, und eine Steuereinrichtung zur Ausrichtung der Blickrichtung der Porträtkamera (8) auf den Abschnitt des Blickbereiches der Suchkamera, welcher das/ die den Referenzdaten entsprechende/-n Merkmal/-e aufweist, vorgesehen sind.

3. Vorrichtung nach Anspruch 2,
dadurch gekennzeichnet,
daß die Bilddatenerfassungsmittel (5) wahlweise und/oder zeitweise zur Erfassung des von der Porträtkamera (8) aufgenommenen Bildes dienen und die daraus sich ergebenden Bilddaten nach Vergleich mit den Referenzdaten zur weiteren Ausrichtung, Schärfeneinstellung, der Einstellung der optischen Abbildungsgröße und/oder der Einstellung der Porträtkamera (8) auf ein Detail des Gesichtes dienen.

4. Vorrichtung nach einem der Ansprüche 2 oder 3,
dadurch gekennzeichnet,
daß die Suchkamera (4) und/oder die Porträtkamera (8) mindestens einen opto-elektronischen Flächensensor aufweist, der insbesondere als CCD- oder CMOS-Kamera gestaltet ist.

5. Vorrichtung nach einem der Ansprüche 1 oder 4,
dadurch gekennzeichnet,
daß die Porträtkamera (8) zur Erzeugung eines elektronischen Bildsignals (A) dient.

6. Vorrichtung nach Anspruch 5,
dadurch gekennzeichnet,
daß das von der Porträtkamera (8) erzeugte elektronische Bildsignal (A) zur automatischen Identifizierung eines Gesichtes, zur automatischen Speicherung oder Fernübertragung dient.

7. Vorrichtung nach Anspruch 6,
dadurch gekennzeichnet,
daß das Bildsignal (A) aufgrund eines Auslösesignals (T) von einer Gesichtsbildverarbeitungseinrichtung (3) weiterverarbeitet wird und daß das Auslösesignal (T) abhängig von der Erreichung des Grades der Übereinstimmung mit in der Speichereinheit (7) hinterlegten Referenzdaten erzeugt wird.

## Claims

1. A method for automatically taking a picture of the face of a person, using a search camera which covers a certain viewing range at a large image angle, and a portrait camera which comprises a small image angle and covers a small viewing range within the viewing range of the search camera, with the portrait camera, with its viewing range, being guided on to a portion of the viewing range of the search camera, which portion is determined as a function of the existence of characteristics which, at least to a certain degree, conform to characteristics which are predetermined in the form of reference data and which are typical of a face.

2. A device for automatically taking a picture of the face of a person, having means for depositing characteristics which are typical of a face and are provided in the form of reference data, having at least one search camera (4) which covers a certain viewing range at a large image angle, having image data recording means (5) which serve to record the image in the form of image data taken by the search camera (4), having means (6) for comparing the above-mentioned image data in respect of the existence and positioning of at least one characteristic corresponding to the reference data within the viewing range of the search camera (4), having at least one portrait camera (8) which comprises a small image angle and covers a small viewing range within the viewing range of the search camera (4), and having a control device for aligning the viewing direction of the portrait camera (8) relative to the portion of the viewing range of the search camera, which portion comprises the characteristic(s) corresponding to the reference data.

3. A device according to claim 2,
characterised in
that the image data recording means (5) optionally and/or temporarily serve to record the image taken by the portrait camera (8) and that the resulting image data, after having been compared with the reference data, serve for further alignment purposes, for definition setting, for setting the optical image size and/or for setting the portrait camera (8) to a detail of the face.

4. A device according to any one of claims 2 or 3,
characterised in
that the search camera (4) and/or the portrait camera (8) comprise/comprises at least one opto-electronic surface sensor provided especially in the form of a CCD camera or CMOS camera.

5. A device according to any one of claims 1 to 4,
characterised in
that the portrait camera (8) serves to generate an electronic image signal (A).

6. A device according to claim 5,
characterised in
that the electronic image signal (A) generated by the portrait camera (8) serves for automatically identifying a face, for automatic storage or remote transmission purposes.

7. A device according to claim 6,
characterised in
that, as a result of a releasing signal (T), the image signal (A) is processed further by a face image processing device (3) and that the releasing signal (T) is generated as a function of the degree of conformity reached with reference data deposited in the storage unit (7).

## Revendications

1. Procédé de prise de vue automatique du visage d'une personne, caractérisé par l'emploi d'une caméra chercheuse qui, avec un grand champ angulaire, saisit une zone de vision déterminée, et d'une caméra de portrait qui présente un petit champ angulaire et saisit une petite zone de vision à l'intérieur de la zone de vision de la caméra chercheuse, dans lequel la caméra de portrait est guidée avec sa zone de vision sur une portion de la zone de vision de la caméra chercheuse qui est déterminée en fonction de l'existence de caractéristiques qui, au moins dans une mesure déterminée, sont en coïncidence avec des caractéristiques prescrites sous forme de données de référence qui sont typiques d'un visage.

2. Dispositif de prise de vue automatique du visage d'une personne, caractérisé par le fait que sont prévus des moyens pour mémoriser des caractéristiques typiques d'un visage sous forme de données de référence, au moins une caméra chercheuse (4) qui, avec un grand champ angulaire, saisit une zone de vision déterminée, des moyens (5) de saisie de données vidéo qui servent à saisir, sous forme de données vidéo, l'image prise par la caméra chercheuse (4), des moyens (6) pour comparer les données vidéo précitées en ce qui concerne la présence et le positionnement d'au moins une caractéristique, correspondant à des données de référence, dans la zone de vision de la caméra chercheuse (4), au moins une caméra de portrait (8) qui présente un petit champ angulaire et saisit une petite zone de vision à l'intérieur de la zone de vision de la caméra chercheuse (4), et un dispositif de pilotage pour orienter la direction de vision de la caméra de portrait (8) sur la portion de la zone de vision de la caméra chercheuse (4) qui présente la/les caractéristique/s correspondant aux données de référence.

3. Dispositif selon la revendication 1,
caractérisé
par le fait que les moyens (5) de saisie de données vidéo servent à saisir, au choix et/ou par intermittence, l'image prise par la caméra de portrait (8) et que les données vidéo qui en résultent, après comparaison avec les données de référence, servent à poursuivre l'orientation, la mise au point, le réglage de la valeur optique de formation de l'image et/ou le pilotage de la caméra de portrait (8) sur un détail du visage.

4. Dispositif selon une des revendications 2 ou 3,
caractérisé
par le fait que la caméra chercheuse (4) et/ou la caméra de portrait (8) présente au moins un détecteur opto-électronique de surface qui est en particulier réalisé sous forme de caméra CCD / à circuit à couplage de charges ou de caméra CMOS / à circuit CMOS.

5. Dispositif selon une des revendications 1 ou 4,
caractérisé
par le fait que la caméra de portrait (8) sert à produire un signal vidéo électronique (A).

6. Dispositif selon la revendication 5,
caractérisé
par le fait que le signal vidéo électronique (A) produit par la caméra de portrait (8) sert à l'identification automatique d'un visage, à la mémorisation automatique ou à la transmission à distance.

7. Dispositif selon la revendication 6,
caractérisé
par le fait que le signal vidéo (A) est à nouveau traité sur la base d'un signal de déclenchement (T) provenant d'un appareil (3) de traitement de l'image du visage et que le signal de déclenchement (T) est produit en fonction du degré atteint de coïncidence avec les données de référence mémorisées dans la mémoire (7).
